# EUROPÄISCHE PATENTANMELDUNG

(11) **EP 2 610 672 A1**
(43) Veröffentlichungstag der Anmeldung: **03.07.2013**
(21) Anmeldenummer: 12197368.9
(22) Anmeldetag: 14.12.2012
(51) Int. Cl.: G03B 25/00, H04N 5/222, G02B 27/22, G03B 35/18

(54) **Anzeigevorrichtung**

(30) Priorität: 28.12.2011 DE 202011052517 U
(71) Anmelder: OS Outstanding Solutions GmbH, 44269 Dortmund (DE)
(72) Erfinder: Schreier, Till, 44139 Dortmund (DE); Overkott, Stephan, 44807 Bochum (DE)
(74) Vertreter: Albrecht, Ralf

(57) **Zusammenfassung**

Die vorliegende Erfindung betrifft eine Anzeigevorrichtung zur Darstellung von Bildern bzw. Bildfolgen in Form einer Pepper's-Ghost-Illusion, umfassend einen Grundkörper (1) mit einer eine Aufstellfläche aufweisenden Aufnahme, in die ein Tablet-PC in horizontaler Position positionierbar ist, und zwei oder mehr teildurchlässige Spiegel (4), die an dem Grundkörper (1) in geneigter Position gehalten und parallel zueinander angeordnet sind, so dass von dem Bildschirm des Tablet-PC's abgestrahltes Licht auf eine reflektierende Oberfläche der teildurchlässigen Spiegel (4) trifft und zur Vorderseite in Richtung eines Betrachters anteilig reflektiert wird.

## Beschreibung

Die Erfindung betrifft eine Anzeigevorrichtung zur Darstellung von Bildern bzw. Bildfolgen in Form einer Pepper's-Ghost-Illusion.

Eine derartige Anzeigevorrichtung ist beispielsweise aus der WO 2009/105847 bekannt. Diese umfasst ein Gehäuse, dessen Innenwände wenigstens teilweise lichtabsorbierend ausgebildet sind, sowie ein bilderzeugendes Element, welches eine lichtemittierende Oberfläche, beispielsweise einen Bildschirm, aufweist. Ferner ist zur Erzeugung einer Pepper ' s- Ghost-Illusion ein teildurchlässiger Spiegel vorgesehen, wobei der Bildschirm derart vor dem Spiegel positioniert und relativ zu diesem angeordnet ist, dass von dem Bildschirm abgestrahltes Licht auf den teildurchlässigen Spiegel trifft und ein hinter dem Spiegel befindliches virtuelles Bild bzw. eine Folge virtueller Bilder erzeugt wird. Ein Betrachter, der seinen Blick auf den geneigten teildurchlässigen Spiegel richtet nimmt beispielsweise Gegenstände, die im Rahmen des Bildes bzw. der Bildfolge gezeigt werden im Raum schwebend wahr und er bekommt einen dreidimensionalen Eindruck.

An dieser Anzeigevorrichtung wird als nachteilig empfunden, dass sie unhandlich ist und keine ausreichende Flexibilität bezüglich der darstellbaren Bilder bzw. Bildfolgen bietet.

Ausgehend von diesem Stand der Technik ist es eine Aufgabe der vorliegenden Erfindung, eine Anzeigevorrichtung anzugeben, die handlich ausgestaltet ist und die flexibel eingesetzt werden kann.

Diese Aufgabe wird gelöst durch eine Anzeigevorrichtung zur Darstellung von Bildern bzw. Bildfolgen in Form einer Pepper's-Ghost-Illusion, umfassend einen Grundkörper mit einer eine Aufstellfläche aufweisenden Aufnahme, in die ein Tablet-PC in horizontaler Position positionierbar ist, und zwei oder mehr teildurchlässige Spiegel, die an dem Grundkörper in geneigter Position gehalten und parallel zueinander angeordnet sind, so dass von dem Bildschirm des Tablet-PC's abgestrahltes Licht auf eine reflektierende Oberfläche der teildurchlässigen Spiegel trifft und zur Vorderseite in Richtung eines Betrachters anteilig reflektiert wird.

Der Erfindung liegt demzufolge die Idee zugrunde, mit den auf dem Bildschirm eines Tablet-PCs dargestellten Bildern bzw. Bildfolgen eine Pepper' s-Ghost-Illusion zu erzeugen. Dazu wird der Tablet-PC in den Grundkörper der erfindungsgemäßen Anzeigevorrichtung eingelegt und eine Bildfolge, beispielsweise ein Video, wird mit dem Tablet-PC abgespielt. Licht, das von dem Bildschirm des Tablet-PCs abgestrahlt wird, trifft auf die reflektierende Oberfläche der geneigt an dem Grundkörper gehaltenen teildurchlässigen Spiegel und wird zur Vorderseite in Richtung eines Betrachters anteilig reflektiert. Im Ergebnis nimmt der Betrachter die Bilder bzw. die Bildfolge, die auf dem Bildschirm des Tablet-Pcs abgespielt werden, in Form einer Pepper' s-Ghost-Illusion wahr, wobei ein dreidimensionaler Effekt entsteht.

Für die Wahrnehmung dieses Effektes muss der Betrachter keine zusätzlichen Hilfsmittel, wie etwa eine 3-D-Brille tragen. Auch der Tablet-PC bzw. dessen Bildschirm muss über keine spezielle Ausstattung verfügen, da die Pepper's-Ghost-Illusion mittels des teildurchlässigen Spiegels und über die konkrete Anordnung erzielt wird. Erfindungsgemäß wird mit geringem konstruktivem Aufwand und unter Nutzung bestehender Technologie ein beachtlicher Effekt bei einem Betrachter hervorgerufen. Die erfindungsgemäße Anzeigevorrichtung ist daher besonders zu Werbe-Zwecken geeignet.

Dabei ist erfindungsgemäß eine hohe Flexibilität gegeben, was die darzustellenden Bilder bzw. Bildfolgen betrifft, da diese über den Bildschirm eines Tablet-PCs bereit gestellt werden, der über beliebige Inhalte verfügen kann.

Erfindungsgemäß sind zwei oder mehr teildurchlässige Spiegel an dem Grundkörper bzw. Gehäuse in geneigter Position gehalten und parallel zueinander angeordnet. Dabei wird auf die beiden teildurchlässigen Spiegel Licht im Wesentlichen von zwei unterschiedlichen Bereichen des Tablet-PC-Bildschirms geworfen. Der Bildschirm kann derart angesteuert werden, dass in den beiden Bereichen - die beispielsweise von der vorderen und der hinteren Hälfte der Bildschirmfläche gebildet werden - zwei verschiedene Videos abgespielt werden, wobei der Betrachter diese einander überlagert wahrnimmt, da gleichzeitig Licht beiden hintereinander angeordneten teildurchlässigen Spiegel zu ihm geworfen wird. Beispielsweise wird in der hinteren Hälfte des Tablet-PC-Bildschirms, von der Licht auf den hinteren teildurchlässigen Spiegel geworfen wird, eine Video abgespielt, welches nur den Hintergrund darstellt, während in der vorderen Hälfte das eigentliche Video läuft. Im Ergebnis ist der dreidimensionale Effekt, den die erfindungsgemäße Vorrichtung beim Betrachter erzeugt besonders prägnant, da dieser zwei hintereinanderliegende Bildfolgen wahrnimmt und so ein Tiefeneffekt entsteht.

Als teildurchlässige Spiegel können beispielsweise transparente Kunststoff-oder Glasplatten, insbesondere mit geeigneter Beschichtung verwendet werden. Auch flexible Materialien, wie etwa eine dünne Kunststofffolie mit Beschichtung, die beispielsweise in einem Rahmen aufgespannt wird, kann verwendet werden. Die teildurchlässigen Spiegel können beispielsweise derart konfiguriert sein, dass sie etwa 50% des einfallenden Lichtes reflektieren und etwa 50% transmittieren. Ein anderes Verhältnis von Reflektion und Transmission ist ebenfalls möglich.

Gemäß einem Ausführungsbeispiel der vorliegenden Erfindung ist vorgesehen, dass die Aufnahme eine Führungsschiene aufweist, in die der Tablet-PC eingeschoben werden kann, wodurch eine sichere Anordnung des Tablet-PCs in der erfindungsgemäßen Anzeigevorrichtung gewährleistet wird. In bevorzugter Weise kann dabei die untere Auflagefläche der Führungsschienen mit einer Polsterung wie beispielsweise einer Vliesschicht versehen sein.

Bei einem weiteren Ausführungsbeispiel sind an dem Grundkörper Steckaufnahmen vorgesehen, in die die teildurchlässigen Spiegel von oben eingesteckt bzw. einsteckbar sind. So können die teildurchlässigen Spiegel auf besonders simple Weise lösbar an dem Grundkörper befestigt werden. Wird die Anzeigevorrichtung nicht benötigt, können die teildurchlässigen Spiegel von Hand aus dem Grundkörper entfernt werden, um die Anzeigevorrichtung insbesondere für den Transport bzw. die Aufbewahrung in einen platzsparenden Zustand zu zerlegen.

Darüber hinaus oder alternativ kann vorgesehen sein, dass die teildurchlässigen Spiegel an dem Grundkörper schwenkbar zwischen einer Betriebsposition und einer eingeklappten Position gehalten sind. Die Anzeigevorrichtung kann auf diese Weise komfortabel für den Transport und eine platzsparende Aufbewahrung zusammengeklappt werden. Die Verbindung von teildurchlässigem Spiegel und Grundkörper bleibt dabei erhalten. Dies kann beispielsweise erzielt werden, indem die Steckaufnahmen schwenkbar an dem Grundkörper befestigt sind.

In Weiterbildung der Erfindung ist vorgesehen, dass der Grundkörper eine geschlossene Unterseite aufweist, wodurch eine hohe Stabilität der Anzeigevorrichtung gewährleistet wird.

Eine weitere Ausführungsform zeichnet sich dadurch aus, dass an der Oberseite der teildurchlässigen Spiegel ein im Wesentlichen parallel zu der Aufnahme für den Tablet-PC angeordneter Deckel vorgesehen ist, der die teildurchlässigen Spiegel übergreift, wobei der Deckel insbesondere schwenkbar im oberen Ende des vorderen Spiegels angeordnet ist. Der Deckel kann über Seitenwände und/oder über eine Rückwand mit dem Grundkörper unter Bildung eines Gehäuses verbunden sein. Durch den Deckel, die Seitenwände und eine Rückwand werden der teildurchlässige Spiegel sowie der Tablet-PC während des Betriebs vor äußeren Einflüssen geschützt.

Das Gehäuse kann dabei innenseitig eine lichtabsorbierende Oberfläche aufweisen. Diese Ausführungsform gewährleistet, dass die Darstellung von Bildern bzw. Bildfolgen in Form einer Pepper's-Ghost-Illusion nicht durch Umgebungs- und/oder Streulicht gestört wird. Die erfindungsgemäße Anzeigevorrichtung kann so insbesondere in hell erleuchteten Räumen und bei Tageslicht verwendet werden, wobei eine Verdunklung der Umgebung nicht erforderlich ist. Deckel, Seitenwände und Rückwand können hierzu beispielsweise aus Kunststoff ausgebildet sein, der zur besseren Lichtabsorption eine dunkle Oberfläche aufweist.

Für einen zusätzlichen Schutz vor Umgebungs- und Streulicht ist in Weiterbildung der Erfindung an der Oberseite des Gehäuses eine nach vorne abragende Blende vorgesehen.

Gemäß einer bevorzugten Ausführungsform ist vorgesehen, dass das Gehäuse im Wesentlichen in Form eines Parallelepipeds ausgebildet ist. Durch diese Form wird dem Umstand Rechnung getragen, dass die teildurchlässigen Spiegel in geneigter Position an dem Gehäuse gehalten sind.

In vorteilhafter Ausgestaltung ist vorgesehen, dass der Deckel mit dem Grundkörper insbesondere für den Transport zu einem geschlossenen Gehäuse zusammenbringbar ist. Dabei sind Deckel und Grundkörper zweckmäßiger Weise komplementär ausgebildet, so dass sie ein geschlossenes Gehäuse bilden. Insbesondere können Deckel und Grundkörper identisch ausgebildet sein. So wird ein Bauteil zweifach verwendet und der Produktionsablauf wird vereinfacht.

Bilden Deckel und Grundkörper im zusammengelegten Zustand ein geschlossenes Gehäuse aus, so ist die erfindungsgemäße Anzeigevorrichtung auch in diesem für den Transport bzw. die Aufbewahrung geeigneten platzsparenden Zustand gegenüber äußeren Einflüssen geschützt. Dabei kann vorgesehen sein, dass der teildurchlässige Spiegel zunächst aus der Anzeigevorrichtung entnommen wird, um Deckel und Grundkörper zu einem geschlossenen Gehäuse zusammenbringen zu können. Der teildurchlässige Spiegel kann in dem geschlossenen Gehäuse gelagert werden. Alternativ wird der teildurchlässige Spiegel beim Zusammenbringen von Deckel und Grundkörper mitbewegt und infolge einer kombinierten Schwenk- und Schiebebewegung automatisch in eine Position gebracht, in welcher er in dem Grundkörper bzw. in dem aus Grundkörper und Deckel gebildeten geschlossenen Gehäuse ruht.

In Weiterbildung der Erfindung ist vorgesehen, dass die teildurchlässigen Spiegel an dem Grundkörper bzw. Gehäuse unter einem Winkel kleiner als 60°, insbesondere unter einem Winkel von 45° geneigt zur Unterseite gehalten sind. Diese Neigung ermöglicht es, dass das von dem horizontal angeordneten Tablet-PC abgestrahlte Licht über den teilreflektierenden Spiegel in Richtung eines vor der Anzeigevorrichtung befindlichen Betrachters geworfen wird.

Hinsichtlich weiterer vorteilhafter Ausgestaltungen und Weiterbildungen der Erfindung wird auf die Unteransprüche sowie nachfolgende Beschreibung eines Ausführungsbeispiels unter Bezugnahme auf die beiliegende Zeichnung verwiesen. In der Zeichnung zeigt:
- Figur 1: eine erfindungsgemäße Anzeigevorrichtung mit zwei teildurchlässigen Spiegeln und Deckel von schräg vorne in schematischer Darstellung;
- Figur 2: die in Figur 1 dargestellte Anzeigevorrichtung in der Seitenansicht;
- Figur 3: eine erfindungsgemäße Anzeigevorrichtung mit zwei teildurchlässigen Spiegeln, einer Rückwand und einem Deckel von schräg vorne in schematischer Darstellung;
- Figur 4: die in Figur 3 dargestellte Anzeigevorrichtung in der Seitenansicht;
- Figur 5: eine weitere erfindungsgemäße Anzeigevorrichtung mit zwei teildurchlässigen Spiegeln, einer Rückwand und einem Deckel von schräg vorne in schematischer Darstellung;
- Figur 6: die in Figur 5 dargestellte Anzeigevorrichtung in perspektivischer Seitenansicht;
- Figur 7: eine weitere erfindungsgemäße Anzeigevorrichtung mit einem Gehäuse von schräg vorne in schematischer Darstellung;
- Figur 8: die Anzeigevorrichtung aus Figur 7 in Vorderansicht; und
- Figur 9: die in Figur 7 dargestellte Anzeigevorrichtung in der Seitenansicht.

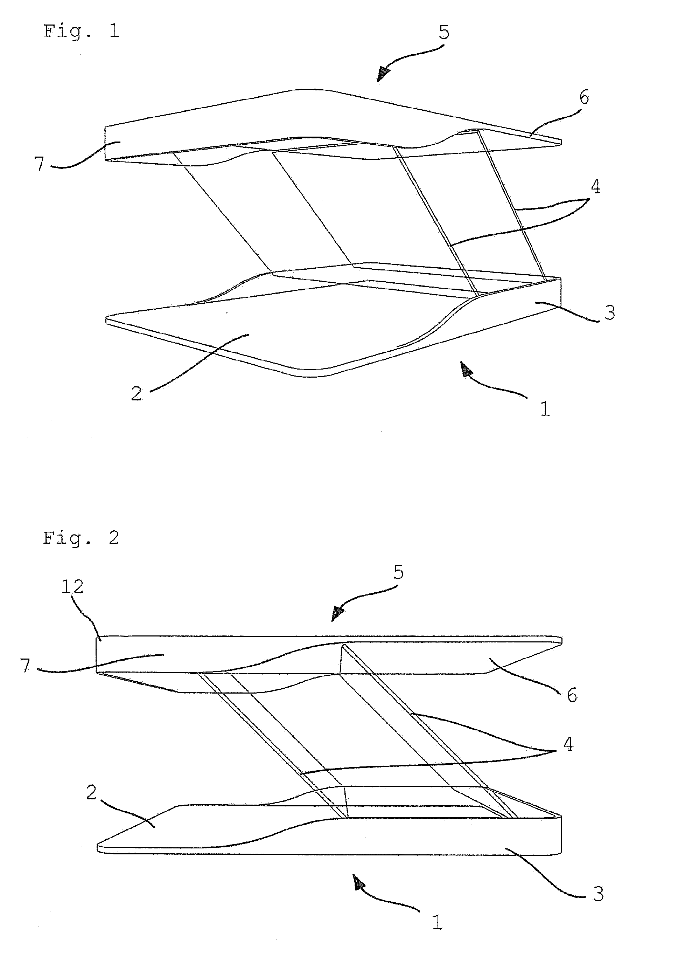

Die Figur 1 zeigt eine erfindungsgemäße Anzeigevorrichtung zur Darstellung von Bildern bzw. Bildfolgen in Form einer Pepper' s-Ghost-Illusion. Diese umfasst einen Grundkörper 1 mit einer im Wesentlichen rechteckigen Bodenplatte 2, von deren Umfangskante ein Steg 3 nach oben aufrecht abragt. Wie in der Figur gut zu erkennen, erstreckt sich der Steg 3 entlang der hinteren Stirnkante und über zwei Drittel der Längsseiten in Richtung der vorderen Stirnkante der Bodenplatte 2, wobei er ab etwa der Plattenmitte geschwungen an Höhe verliert. Die Bodenplatte 2 bildet zusammen mit dem Steg 3 eine Aufnahme aus, in die ein Tablet-PC in horizontaler Position eingelegt werden kann.

An dem Grundkörper 1 sind zwei teildurchlässige Spiegel 4 gehalten, die parallel zueinander unter einem Winkel von etwa 45° zu der durch die Bodenplatte 2 definierten Auflagefläche für den Tablet-PC geneigt angeordnet sind, so dass von dem Bildschirm des Tablet-PCs abgestrahltes Licht auf die reflektierende Oberfläche der Spiegel 4 trifft und von diesen zur Vorderseite in Richtung eines Betrachters anteilig reflektiert wird. Die Beschichtung der teildurchlässigen Spiegel 4 ist derart konfiguriert, dass etwa 50% des auftreffenden Lichts reflektiert und 50% transmittiert werden.

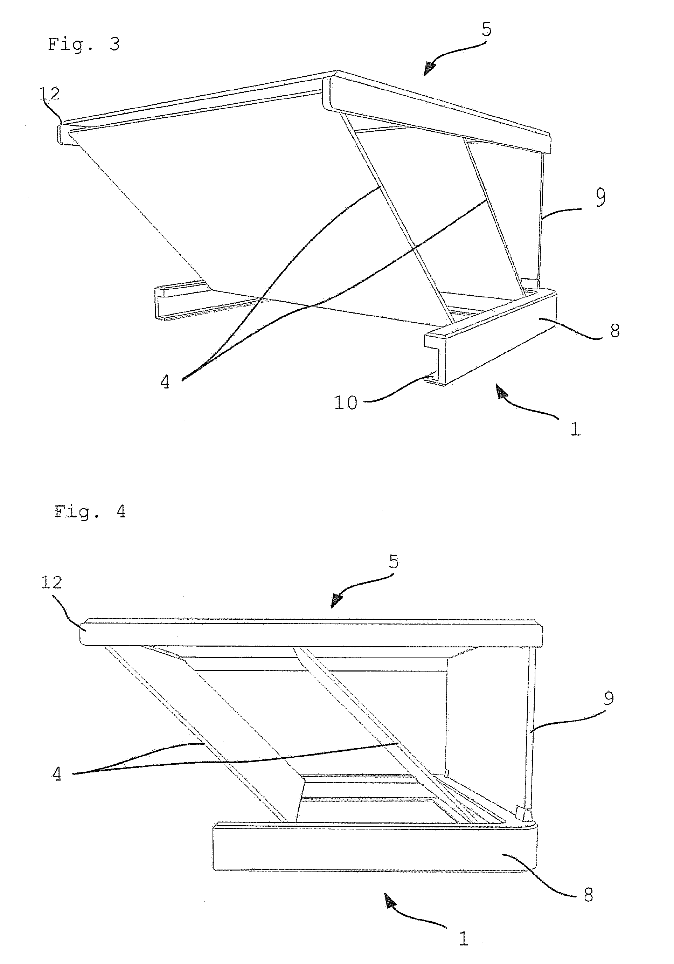

Die dargestellte Anzeigevorrichtung umfasst ferner einen Deckel 5, der an der Oberseite der beiden teildurchlässigen Spiegel 4 angeordnet ist und sich im Wesentlichen parallel zu der Bodenplatte 2 des Grundkörpers 1 erstreckt. Der Deckel 5 ist komplementär zu dem Grundkörper 1 geformt. Mit anderen Worten umfasst der Deckel 5 ebenfalls eine im Wesentlichen rechteckige Grundplatte 6, von deren Umfangskante ein Steg 7 nach unten aufrecht abragt. Dieser erstreckt sich entlang der vorderen Stirnkante und über etwa ein Drittel der Längsseiten in Richtung der hinteren Stirnkante, wobei er ab etwa ab einem Viertel der Platte geschwungen an Höhe verliert, wie in der Seitendarstellung in Figur 4 gut zu erkennen ist. Der Steg 3 des Grundkörpers bildet mit dem Steg 7 des Deckels eine geschlossen umlaufende Seitenwand, wenn Grundkörper 1 und Deckel 5 aufeinander aufliegen.

Der Deckel 7 erstreckt sich dabei über die obere Kante des vorderen Spiegels 4 hinaus in Richtung des Betrachters, wodurch eine Blende 12 gebildet wird, welche Schutz vor Streu- und Umgebungslicht bietet.

An dem Deckel 5 sind Steckaufnahmen vorgesehen, in welche der vordere teildurchlässige Spiegel 4 eingeschoben ist, und der Deckel 5 liegt auf dem hinteren teildurchlässige Spiegel 4 oberseitig auf. In der dargestellten Ausführungsform übergreift der Deckel 5 die teildurchlässigen Spiegel 4 und weist eine den teildurchlässigen Spiegeln 4 zugewandte lichtabsorbierende Oberfläche auf.

Für eine platzsparende Aufbewahrung bzw. für den Transport kann die Anzeigevorrichtung zerlegt werden, indem der Deckel 5 von den teildurchlässigen Spiegeln 4 abgehoben wird und die teildurchlässigen Spiegel 4 aus den Steckaufnahmen des Grundkörpers 1 entnommen werden. Die teildurchlässigen Spiegel 4 werden flach auf dem Grundkörper 1 positioniert, und der Deckel 5 wird auf diesen aufgelegt, wobei aufgrund der komplementären Ausbildung von Grundkörper 1 und Deckel 5 ein geschlossenes Gehäuse erhalten wird.

Alternativ zu der hier dargestellten Ausführungsform können die Steckaufnahmen schwenkbar an Grundkörper 1 und Deckel 5 gehalten sein, so dass der Grundkörper 1 und der Deckel 5 durch eine kombinierte Schwenk- und Schiebebewegung zu einem geschlossenen Gehäuse zusammenbringbar sind. Die teildurchlässigen Spiegel 4 werden dazu durch eine Schwenkbewegung simultan in eine horizontale Position gebracht und anschließend werden Deckel 5, Grundkörper 1 und die teildurchlässigen Spiegel 4 in horizontaler Richtung zusammengeschoben, so dass ein geschlossenes Gehäuse erhalten wird.

Für den Betrieb wird auch hier ein Tablet-PC in die Aufnahme des Grundkörpers 1 eingelegt und beispielsweise ein Video abgespielt. Licht, welches von der vorderen Hälfte des Tablet-PCs emittiert wird, trifft dabei im Wesentlichen auf den vorderen teildurchlässigen Spiegel 4, während das von der hinteren Hälfte des Bildschirms emittierte Licht im Wesentlichen auf den hinteren teildurchlässigen Spiegel 4 geworfen wird. Der Bildschirm wird gezielt so angesteuert, dass in den beiden Hälften der Bildschirmfläche separate Videos abgespielt werden. Auf dem Tablet-PC ist dazu eine geeignete Applikation installiert. Ein vor der Anzeigevorrichtung befindlicher Betrachter nimmt die beiden Videos überlagert wahr, da gleichzeitig Licht von beiden hintereinander angeordneten teildurchlässigen Spiegeln 4 zu ihm geworfen wird. Der Bildschirm wird hier derart angesteuert, dass in der hinteren Hälfte des Tablet-PC-Bildschirms ein Video abgespielt wird, welches den Hintergrund darstellt, während in der vorderen Hälfte ein Hauptvideo läuft. Im Ergebnis ist der dreidimensionale Effekt, den die erfindungsgemäße Vorrichtung beim Betrachter erzeugt, besonders prägnant, da Hinter- und Vordergrund räumlich voneinander getrennt sind und so ein Tiefeneffekt entsteht. Eine weitere Ausgestaltungsform der vorliegenden Erfindung ist in den Figuren 3 und 4 dargestellt. Diese umfasst als Grundkörper 1 einen U-förmig ausgebildeten Rahmen 8, dessen Öffnung nach vorne weist und der einen C-förmigen Querschnitt aufweist. Der Rahmen 8 bildet hier eine Führungsschiene, in die ein Tablet-PC in horizontaler Position eingeschoben werden kann.

Der Deckel 5 ist hier ferner über eine Rückwand 9 mit dem Grundkörper 1 verbunden, die - wie der Deckel 5 - eine den teildurchlässigen Spiegeln 4 zugewandte lichtabsorbierende Oberfläche aufweist.

Für den Betrieb wird ein Tablet-PC in den Grundkörper 1 eingeschoben, so dass er an der hinteren Stirnseite des Rahmens 8 zum Anliegen kommt und auf dem unteren Stützsteg 10 des Rahmens 8 aufliegt. In der zuvor beschriebenen Art wird eine Pepper' s-Ghost-Illusion für einen Betrachter erzeugt. Dabei bietet die Rückwand 9 bei dieser Ausführungsform zusätzlichen Schutz vor Umgebungs- und Streulicht.

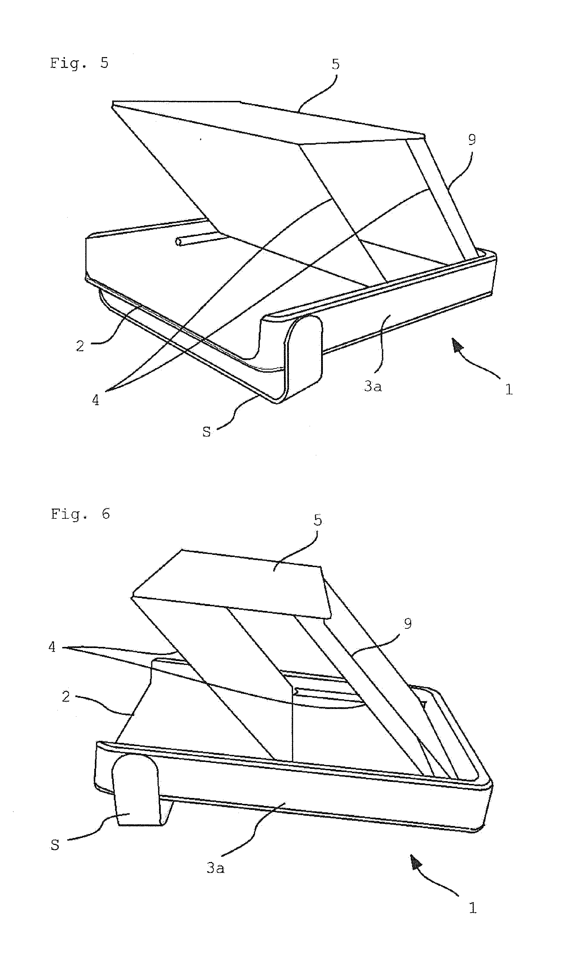

In den Figuren 5 und 6 ist eine dritte Ausführungsform einer erfindungsgemäßen Anzeigevorrichtung dargestellt. Diese umfasst einen Grundkörper 1 mit einer Bodenplatte 2, die eine im Wesentlichen rechteckige Form aufweist. Von der Umfangskante der Bodenplatte 2 ragt - analog zu der zuvor beschriebenen Ausführungsform - ein Steg 3a nach oben aufrecht ab. Dieser erstreckt sich entlang der hinteren Stirnkante und über die gesamten Längsseiten der Bodenplatte 2. Die Bodenplatte 3 bildet zusammen mit dem Steg 3a eine Aufnahme aus, in die ein Tablet-PC in horizontaler Position eingelegt werden kann. Am vorderen Endbereich des Grundkörpers 1 ist ferner ein im Wesentlichen U-förmig ausgebildeter Stützsteg S vorgesehen. Dieser umgreift den Grundkörper 1 an seiner Vorderseite und ist außenseitig an dem vorderen Endbereich des Stegs 3a schwenkbar zwischen einer Betriebs- und einer Transportposition gehalten. In der Figur befindet sich der Haltesteg S in der Betriebsposition, in welcher er im vorderen Endbereich des Grundkörpers 1 als Standfuß dient, so dass der Grundkörper 1 in gekippter Position auf einer horizontale Fläche aufgestellt werden kann.

Analog zu den in Figur 1 und Figur 3 dargestellten Ausführungsformen umfasst die Anzeigevorrichtung ferner zwei teildurchlässige Spiegel 4, die an dem Grundkörper 1 gehalten sind, und sich parallel zu einander erstrecken.

An der Oberseite der beiden teildurchlässigen Spiegel 4 ist ein Deckel 5 angeordnet, der sich im Wesentlichen parallel zu der Bodenplatte 2 erstreckt. Der Deckel 5 ist bei dieser Ausführungsform jedoch nicht komplementär zu dem Grundkörper 1 geformt, sondern wird durch eine rechteckige Platte gebildet, deren Ausdehnung in Längsrichtung der Anzeigevorrichtung im Wesentlichen dem Abstand entspricht, in welchem die beiden teildurchlässigen Spiegel 4 an dem Grundkörper 1 gehalten sind. Der Deckel 5 weist auch hier eine den teildurchlässigen Spiegeln 4 zugewandte lichtabsorbierende Oberfläche auf, und ist über eine Rückwand 9 mit dem Grundkörper 1 verbunden, die sich parallel zu den beiden teildurchlässigen Spiegeln 4 erstreckt.

Der hintere teildurchlässige Spiegel 4 und die Rückwand 9 sind an dem Grundkörper 1 schwenkbar gehalten. Dazu weisen Sie an ihrem unteren Endbereich Gelenkzapfen auf, welche in entsprechende Bohrungen an der Innenseite des Stegs 3a eingreifen.

Der vordere Spiegel 4 ist, wie in den Figuren 5 und 6 gut erkennbar ist, an seinem unteren Endbereich in Führungsnuten, die sich entlang der Längsseiten des Stegs 3a innenseitig erstrecken, schwenkbar und verschiebbar gehalten. An seinem oberen Ende ist der Spiegel 4 gelenkig mit dem Deckel 5 verbunden, der an seinem hinteren Endbereich auf die Rückwand 9 und den hinteren Spiegel 4 aufgesteckt ist. Zum Transport wird der Deckel 5 an seinem hinteren Ende von der Rückwand 9 und dem hinteren Spiegel 4 gelöst, und anschließend werden die beiden Spiegel 4 sowie die Rückwand 9 in ihrer nahezu horizontalen Lage verschwenkt. Dabei wird der vordere Spiegel 4 entlang der Führungsnuten nach hinten geschoben, so dass der vordere Spiegel 4 und der Deckel 5a vollständig innerhalb der Aufnahme liegen.

Nicht dargestellt ist, dass der Deckel 5 an seiner vorderen Stirnkante mit einer nach vorne abragenden Blende versehen sein kann.

Für den Betrieb wird analog zu der zuvor beschriebenen Ausführungsform ein Tablet-PC ein die Aufnahme des Grundkörpers 1 eingelegt und beispielsweise ein Video abgespielt. In der zuvor beschriebenen Art wird eine Pepper' s-Ghost-Illusion für einen Betrachter erzeugt.

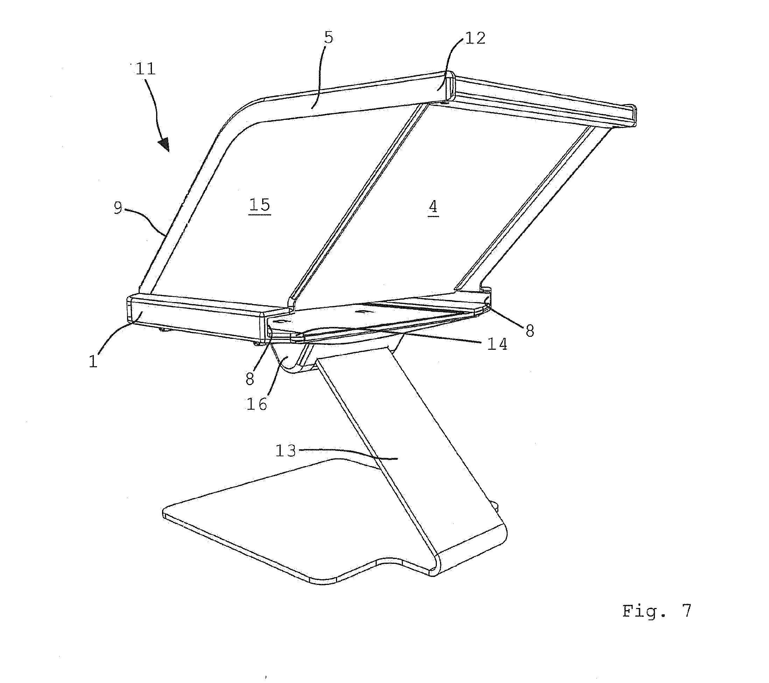

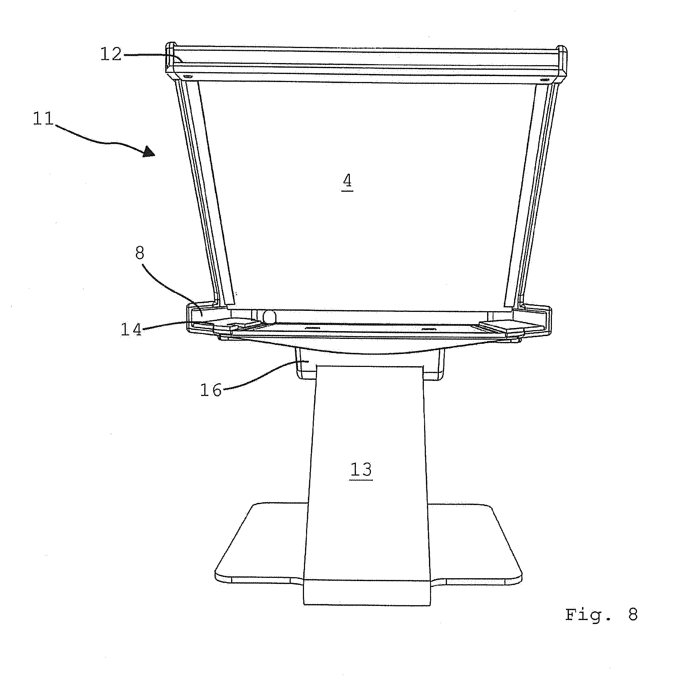

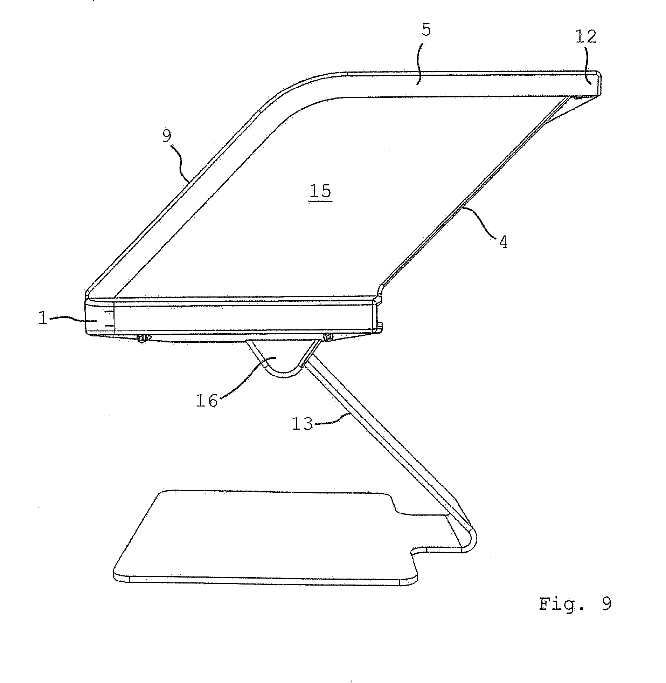

In den Figuren 7 bis 9 ist eine weitere Ausführungsform einer erfindungsgemäßen Anzeigevorrichtung dargestellt. Diese umfasst ein geschlossenes Gehäuse 11 mit einer offenen Vorderseite, welches in der Seitenansicht im Wesentlichen in der Form eines Parallelepipeds ausgebildet ist. Das Gehäuse 11 besitzt einen Grundkörper 1, der zur Vorderseite offen ist und seitlich zwei Führungsschienen 8 aufweist, in die ein Tablet-PC in horizontaler Position eingeschoben werden kann. Die Auflageflächen der Führungsschienen 8 sind mit einer Polsterung in Form von Streifen 14 aus einem Vlies- oder Filzmaterial versehen. Von dem Grundkörper 1 ragen seitlich zwei Seitenwände 15 nach oben ab. Des Weiteren ist an der Rückseite des Grundkörpers 1 eine Rückwand 9 vorgesehen, die in einen Deckel 5 übergeht. Innenseitig weist das Gehäuse 11 eine lichtabsorbierende Oberfläche auf, und an der Vorderseite des Deckels 5 ist eine nach vorne abragende Blende 12 vorgesehen, welche mit dem vorderen Spiegel 4 vorsteht, so dass sie einen Schutz vor Streu- und Umgebungslicht bietet.

Der Grundkörper 1 bzw. das Gehäuse 11 ist an einem Gestell 13 befestigt und an diesem über ein Gelenk 16 um eine horizontale Achse schwenkbar gehalten.

Ferner sind zwei teildurchlässige Spiegel 4 an dem Gehäuse 11 in geneigter Position - ebenfalls unter einem Winkel von 45° geneigt zur Unterseite - gehalten. Licht, welches von dem Tablet-PC abgestrahlt wird, trifft auf die reflektierenden Oberflächen der teildurchlässigen Spiegel 4 und wird zur offenen Vorderseite des Gehäuses 11 anteilig reflektiert.

## Patentansprüche

1. Anzeigevorrichtung zur Darstellung von Bildern bzw. Bildfolgen in Form einer Pepper's-Ghost-Illusion, umfassend einen Grundkörper (1) mit einer eine Aufstellfläche aufweisenden Aufnahme, in die ein Tablet-PC in horizontaler Position positionierbar ist, und zwei oder mehr teildurchlässige Spiegel (4), die an dem Grundkörper (1) in geneigter Position gehalten und parallel zueinander angeordnet sind, so dass von dem Bildschirm des Tablet-PC's abgestrahltes Licht auf eine reflektierende Oberfläche der teildurchlässigen Spiegel (4) trifft und zur Vorderseite in Richtung eines Betrachters anteilig reflektiert wird.

2. Anzeigevorrichtung nach Anspruch 1, **dadurch gekennzeichnet, dass** der Grundkörper (1) Führungsschienen aufweist, in die der Tablet-PC eingeschoben werden kann, wobei insbesondere eine untere Auflagefläche der Führungsschienen mit einer Polsterung wie beispielsweise einer Vliesschicht versehen ist.

3. Anzeigevorrichtung nach Anspruch 1 oder 2, **dadurch gekennzeichnet, dass** an dem Grundkörper (1) Steckaufnahmen vorgesehen sind, in die die teildurchlässigen Spiegel (4) von oben eingesteckt bzw. einsteckbar sind.

4. Anzeigevorrichtung nach einem der vorhergehenden Ansprüche, **dadurch gekennzeichnet, dass** die teildurchlässigen Spiegel (4) schwenkbar an dem Grundkörper (1) gehalten sind, wobei zumindest ein vorderer teildurchlässiger Spiegel (4) an dem Grundkörper (1) verschiebbar ist, so dass er durch eine Schwenkbewegung und eine Schiebebewegung innerhalb des Grundkörpers (1) positionierbar ist.

5. Anzeigevorrichtung nach einem der vorhergehenden Ansprüche, **dadurch gekennzeichnet, dass** an der Oberseite der teildurchlässigen Spiegel (4) ein im Wesentlichen parallel zu der Aufnahme für den Tablet-PC angeordneter Deckel (5) vorgesehen ist, der den teildurchlässigen Spiegel (4) übergreift, wobei der Deckel (5) insbesondere schwenkbar am oberen Ende des vorderen Spiegels (4) angeordnet ist.

6. Anzeigevorrichtung nach Anspruch 5, **dadurch gekennzeichnet, dass** der Deckel (5) über Seitenwände und/oder über eine Rückwand (9) mit dem Grundkörper (1) unter Bildung eines Gehäuses (11) verbunden ist.

7. Anzeigevorrichtung nach Anspruch 6, **dadurch gekennzeichnet, dass** das Gehäuse (11) in der Seitenansicht im Wesentlichen die Form eines Parallelepipeds aufweist.

8. Anzeigevorrichtung nach Anspruch 7, **dadurch gekennzeichnet, dass** das Gehäuse (11) innenseitig eine lichtabsorbierende Oberfläche aufweist.

9. Anzeigevorrichtung nach einem der Ansprüche 6 bis 8, **dadurch gekennzeichnet, dass** an der Oberseite des Gehäuses (11) eine nach vorne abragende Blende (12) vorgesehen ist.

10. Anzeigevorrichtung nach Anspruch 5 bis 9, **dadurch gekennzeichnet, dass** der Deckel (5) mit dem Grundkörper (1) insbesondere für den Transport zu einem geschlossenen Gehäuse zusammenbringbar ist.

11. Anzeigevorrichtung nach Anspruch 10, **dadurch gekennzeichnet, dass** der Deckel (5) an dem Grundkörper (1) und/oder den teildurchlässigen Spiegeln (4) derart gehalten ist, dass er durch eine Schiebe- und/oder Schwenkbewegung mit dem Grundkörper (1) zu einem geschlossenen Gehäuse zusammenbringbar ist.

12. Anzeigevorrichtung nach einem der vorhergehenden Ansprüche, **dadurch gekennzeichnet, dass** der Grundkörper (1) eine geschlossene Unterseite aufweist.

13. Anzeigevorrichtung nach einem der vorhergehenden Ansprüche, **dadurch gekennzeichnet, dass** die teildurchlässigen Spiegel (4) an dem Grundkörper (1) bzw. Gehäuse (11) unter einem Winkel kleiner als 60°, insbesondere unter einem Winkel von 45° geneigt zur Aufstellfläche gehalten ist.

14. Anzeigevorrichtung nach einem der vorherigen Ansprüche, **dadurch gekennzeichnet, dass** der Grundkörper (1) an einem Standfuß (13) montiert und an diesem insbesondere um eine horizontale Achse schwenkbar gehalten ist.
